# FASCICULE DE BREVET EUROPEEN

(11) **EP 2 580 075 B1**
(45) Date de publication et mention de la délivrance du brevet: **03.12.2014**
(21) Numéro de dépôt: 11735456.3
(22) Date de dépôt: 08.06.2011
(51) Int. Cl.: F16D 55/22, B60G 21/05, F16D 55/00

(54) **SYSTEME DE SUSPENSION DE VEHICULE CONPRENANT UN SUPPORT DE ROUE**
RADAUFHÄNGUNG FÜR KRAFTFAHRZEUGE MIT EINEM RADTRÄGER
WHEEL SUSPENSION FOR MOTOR VEHICLES HAVING A WHEEL CARRIER

(30) Priorité: 10.06.2010 FR 1054583
(43) Date de publication de la demande: 17.04.2013
(73) Titulaire: Peugeot Citroën Automobiles SA, 78140 Vélizy Villacoublay (FR)
(72) Inventeur: RENOULT, Gilles, F-91370 Verrieres Le Buisson (FR)
(86) Numéro de dépôt international: PCT/FR2011/051298
(87) Numéro de publication internationale: WO 2011/161352

(56) Documents cités:
- US-A1- 2003 165 280
- US-A1- 2004 032 160
- US-A1- 2006 082 091

## Description

La présente invention est relative à un système de support de roue d'un train roulant de véhicule.

Dans un train roulant de véhicule, il est possible de prévoir un système de support de roue qui comporte un dispositif de fixation d'étrier de disque de frein directement constitué par une partie du bras de suspension correspondant, comme décrit dans la demande FR2849682 ou US 2004 032160 A1.

Pour faire varier la voie des trains roulants dans une gamme d'un même modèle de véhicule ou dans une gamme de modèles de véhicules utilisant une même plate forme, en utilisant un bras de suspension équipé d'un tel dispositif de fixation d'étrier de disque de frein, il faut faire varier le bras de suspension ou faire varier ledit dispositif de fixation d'étrier suivant la voie à considérer dans la gamme. Tant le bras que le dispositif de fixation sont des organes du véhicule qui sont onéreux à concevoir comme à produire et qui sont volumineux à stocker tant en bord de chaîne de production et que comme pièce de rechange. Ainsi, toute modification de voie de train roulant dans la gamme est contraignante en regard de la flexibilité de la chaîne de montage du fait par exemple de la place qui doit être réservée aux différentes références desdits organes. Il en va de même pour la gestion des pièces de rechange. De plus, la conception desdits organes dans la gamme est pénalisée en cas de nécessité de disposer d'un large éventail de voies de trains roulants dans la gamme.

La présente invention a notamment pour but de remédier aux inconvénients de l'art antérieur.

A cet effet, l'invention a pour objet un système de support de roue d'un train roulant de véhicule, notamment automobile, comportant un bras de suspension, un étrier de frein et un organe de guidage en rotation de disque de frein associé à la roue. Ce système comporte une platine pourvue d'une part d'une partie centrale de support de l'organe de guidage à rotation, qui est interposée entre le bras de suspension et l'organe de guidage en rotation, est fixée de manière démontable au bras de suspension et a une épaisseur prédéterminée dans la direction de l'axe l'organe de guidage à rotation et définissant la voie du train roulant et d'autre part d'au moins une partie latérale de support de l'étrier de frein. La platine peut être remplacée par une autre platine dont la partie centrale a une épaisseur prédéterminée différente pour définir une voie différente du train roulant.

Dans un mode de réalisation du système selon l'invention, la partie centrale comporte une première face plane jointivement en appui sur une face plane du bras de suspension, en position de fixation de la platine au bras de suspension, et la partie centrale comporte une deuxième face plane à l'opposé de ladite première face plane jointive au bras et à laquelle est fixée l'organe de rotation, la distance séparant lesdites première et deuxième faces planes définissant l'épaisseur de la partie centrale.

Dans une variante ce mode de réalisation, la partie latérale de support d'étrier présente une épaisseur fixe à partir de la deuxième face plane.

Dans divers modes de réalisation du système selon l'invention, on peut éventuellement avoir recours en outre à l'une et/ou à l'autre des dispositions suivantes :
- l'organe de guidage en rotation de disque de frein associé à la roue est un roulement pourvu d'un flasque fixe côté bras de suspension et d'un flasque tournant qui est adapté à supporter un disque de frein, le flasque fixe pouvant alors comporter une bride de fixation à la partie centrale de la platine ;
- la partie latérale de support d'étrier comporte une oreille périphérique à la partie centrale de la platine ;
- la partie latérale de support d'étrier comporte un perçage de passage de vis de fixation d'étrier de frein ;
- la partie latérale de support d'étrier a une épaisseur déterminée par la fixation de l'étrier à la platine ;
- la partie centrale de la platine et la partie latérale de support d'étrier ont des épaisseurs différentes.

Par ailleurs, l'invention a également pour objet une gamme de dispositifs de fixation d'un étrier de frein à disque pour une gamme de véhicules comportant un premier modèle de véhicule présentant une première voie déterminée à son train roulant avant ou arrière et un deuxième modèle de véhicule présentant une deuxième voie à son même train roulant, la deuxième voie étant plus large que la première voie. Les dispositifs de fixation de la gamme comprennent un premier modèle de platine et un deuxième modèle de platine, chaque platine étant pourvue d'une part d'une partie centrale de support qui est adaptée à supporter un organe de guidage à rotation de disque de frein associé à une roue du véhicule, est adaptée à être interposée entre un bras de suspension du train roulant du véhicule et l'organe de guidage en rotation, est conformée pour être fixée de manière démontable au bras de suspension et d'autre part d'au moins une partie latérale de support d'étrier de frein. Dans cette gamme de dispositifs, la partie centrale du premier modèle de platine a une première épaisseur prédéterminée dans la direction de l'axe de l'organe de guidage à rotation pour définir la première voie du train roulant du premier modèle de véhicule et la partie centrale du deuxième modèle de platine a une deuxième épaisseur prédéterminée dans la direction de l'axe de l'organe de guidage à rotation pour définir la deuxième voie du train roulant du deuxième modèle de véhicule.

D'autres buts, caractéristiques et avantages de l'invention apparaîtront au cours de la description suivante d'un de ses modes de réalisation, donné à titre d'exemple non limitatif, en regard des dessins joints.

Sur les dessins :
- la figure 1 est une vue en perspective de trois quarts face montrant un premier dispositif selon l'invention et montrant partiellement son système de support de roue ;
- la figure 2 est une vue schématique en section transversale suivant la ligne II-II de la figure 1 ;
- la figure 3 est une vue en perspective d'un deuxième dispositif selon l'invention, dont l'épaisseur d'une partie de sa platine est différente de l'épaisseur de la platine du premier dispositif ;
- la figure 4 est une vue en perspective, montrant de trois quarts arrière le deuxième dispositif et montrant partiellement son système de support de roue ;
- la figure 5 est une vue de face qui représente tant le premier dispositif que le deuxième dispositif ;
- la figure 6 est une vue de gauche du premier dispositif ;
- la figure 7 est une vue de gauche du deuxième dispositif.

Sur les différentes figures, les mêmes références désignent des éléments identiques ou similaires.

Dans la description qui va suivre, la direction désignée comme longitudinale correspond à l'axe d'avancement du véhicule.

En se reportant aux figures, la référence 10 désigne une platine formant un dispositif qui sert à la fixation d'un étrier 12 pour un disque de frein 14 de roue arrière de véhicule. L'étrier 12 et le disque 14, représentés schématiquement aux figures, sont de type classique.

L'étrier 12 comporte un flasque de fixation ayant une portion inférieure 17 et une portion supérieure 18 servant à sa solidarisation à la platine 10.

Le disque 14 est, de manière classique, solidaire d'un flasque tournant 22 appartenant à un organe de guidage en rotation, en l'espèce un roulement 24 de type classique. Ce roulement comporte un arbre tournant 25 en saillie radiale duquel s'étend le flasque tournant 22. Ce roulement comporte, côté suspension du véhicule, un flasque fixe 26 qui s'étend radialement en saillie d'une douille de roulement 36, cette douille recevant à rotation l'arbre 25.

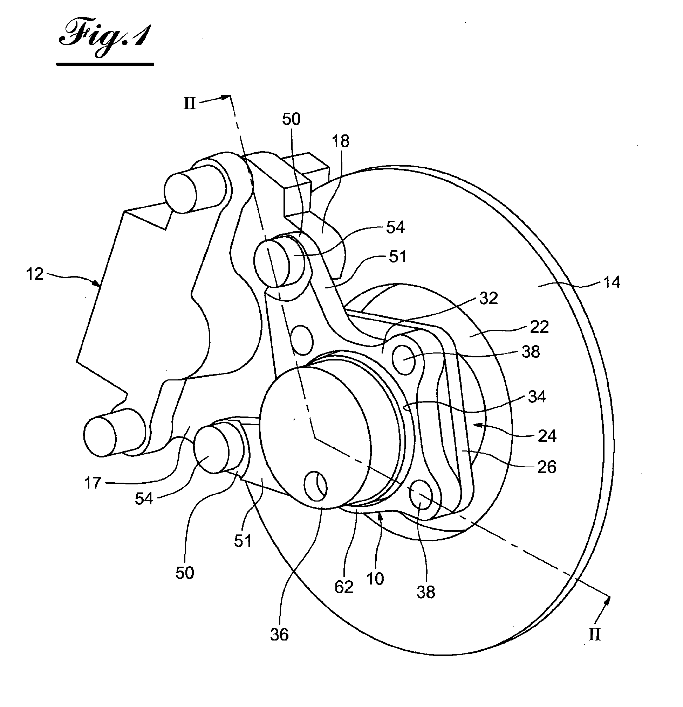

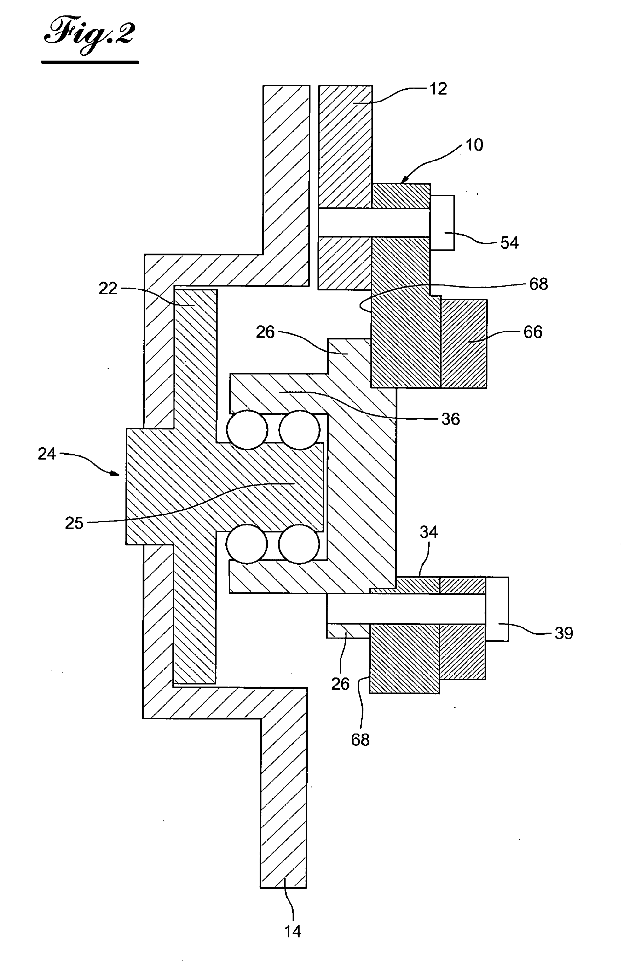

La platine 10, qui s'étend verticalement et dans la direction longitudinale, est pourvu d'une partie centrale de support 32 qui délimite un perçage de centrage 34 dans lequel est montée la douille de roulement 36 en saillie radiale de laquelle s'étend le flasque fixe 26. La partie centrale de support 32 délimite aussi quatre perçages 38 (figure 2) de passage de vis de fixation 39 (figure 1) de la platine 10 au bras de suspension 66 du véhicule. Ainsi, le flasque fixe 26 constitue une bride annulaire de fixation à la partie centrale 32 de la platine 10 par les vis 39.

La platine 10 comporte deux parties latérales de fixation d'étrier 50 constituées par des oreilles issues d'un lamage pratiqué dans des pattes de fixation d'étrier 51. Les oreilles 50 et les pattes 51 s'étendent en saillies à la périphérie de la partie centrale de support 32 et dans le plan de cette dernière. Chaque partie de fixation 50 constituée par une oreille délimite un perçage de fixation 52 servant au passage de deux vis de fixation 54 permettant de visser l'étrier 12 sur la platine 10.

Chaque partie de fixation 50 présente une épaisseur E qui est fixe et standard compte tenu de l'épaisseur de la portion inférieure 17 du flasque de fixation de l'étrier, de la portion supérieure 18 du flasque de fixation de l'étrier et des vis de fixation 54.

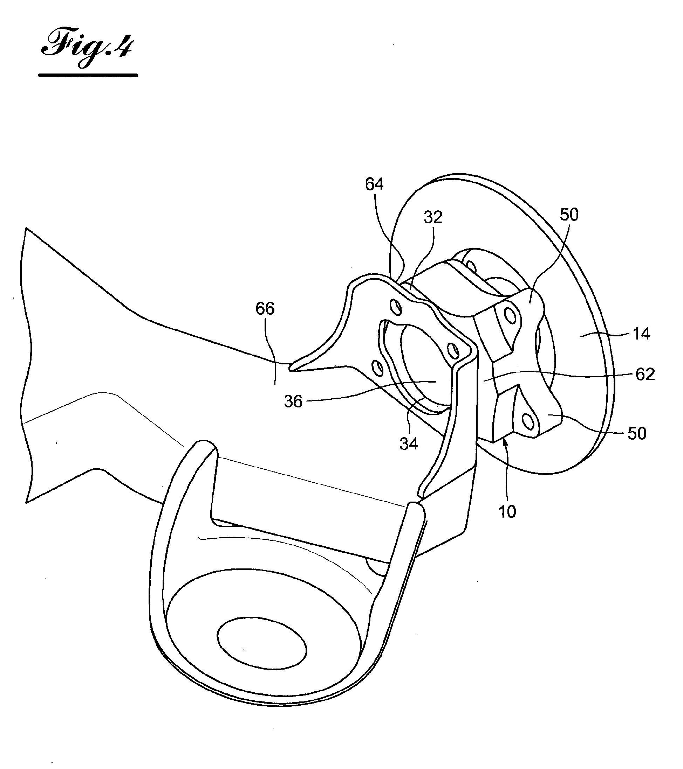

La partie centrale 32 comporte une première face plane 62 (figures 1, 3 et 4) qui sert de référence pour l'épaisseur de la platine 10, en s'étendant verticalement dans un plan longitudinal. En position de fixation de la platine 10 à un bras de suspension 66 de type classique, la première face plane 62 est jointivement en appui sur une face plane 64 appartenant au bras de suspension 66.

La partie centrale 32 comporte une deuxième face plane 68 (figure 2) à l'opposé de ladite première face plane 62 jointive au bras. Dans les réalisations représentées aux figures, lesdites premières et deuxièmes faces planes sont parallèles. A ladite position de fixation, la partie centrale 32 et l'organe de rotation constitué par le roulement 24 sont fixés avec appui du roulement sur la deuxième face plane 68.

La distance séparant lesdites première et deuxième faces planes définit l'épaisseur de la partie centrale 32 qui sépare le bras de suspension 66 du roulement 24.

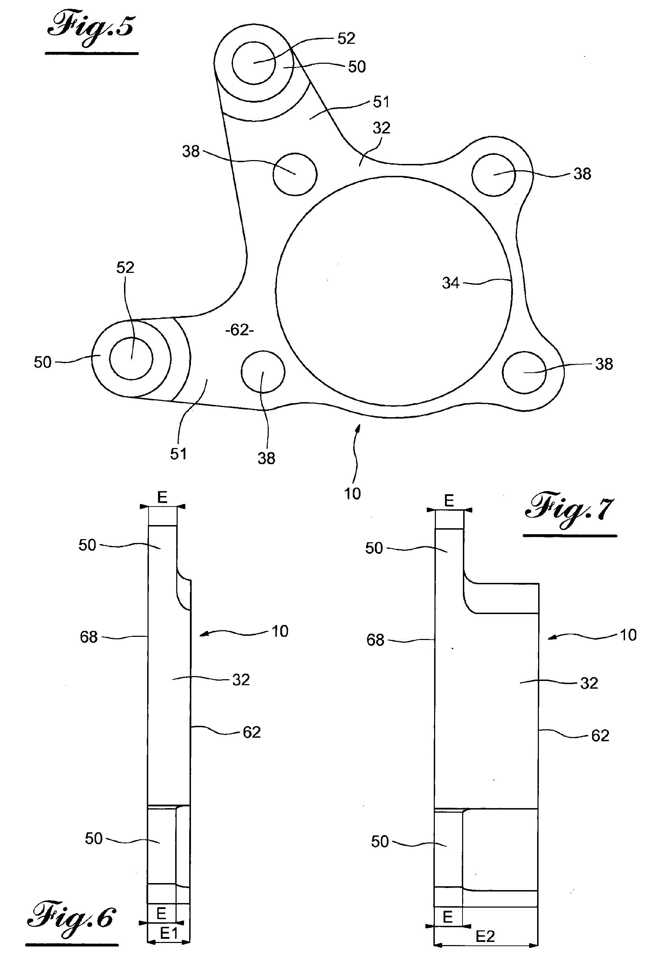

Dans le mode de réalisation représenté aux figures 1, 2, 5 et 6, partie centrale de support 32 de la platine 10 comporte une épaisseur E1 (figure 6) qui fait partie de la chaîne de cotes déterminant la voie arrière du véhicule.

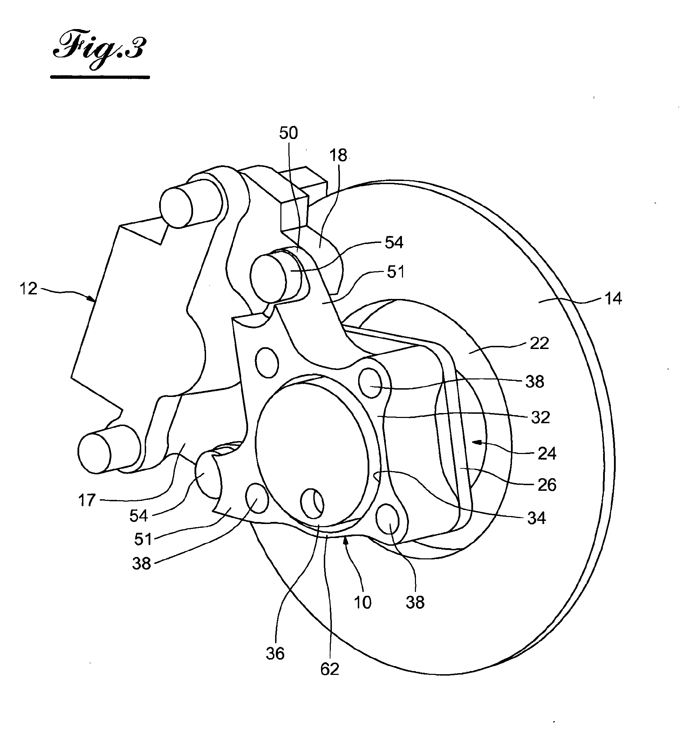

Dans le mode de réalisation représenté aux figures 3, 7 et 8, partie centrale de support 32 de la platine 10 comporte une épaisseur E2 (figure 7) qui est plus grande que l'épaisseur E1 pour permettre, dans une gamme de modèles de véhicules ayant un train roulant arrière pourvu des mêmes bras de suspension, roulements et étriers de frein, de disposer d'une voie arrière étroite pour le modèle équipé de la platine de la figure 1 et d'une voie arrière large pour le modèle équipé de la platine de la figure 3.

Ainsi, selon l'invention des platines 10 ayant des parties centrales d'épaisseurs différentes peuvent être utilisées dans une gamme de modèles de véhicules dont par exemple les trains arrière ont une largeur différente selon les modèles. Les platines 10 permettent de rendre évolutif un train roulant dont les bras de suspension, les étriers de frein et les roulements ont une configuration commune et des dimensions standardisées. Le choix des platines dans une gamme de platines permet de disposer, en interposant la platine choisie entre les bras de suspension et les roulements de roue, de voies différentes pour les trains roulants, par exemple arrière, des différents modèles.

Avantageusement, pour chaque roue d'un train roulant, par exemple arrière, le bras de suspension 66, l'étrier de frein 12, le roulement 24 formant organe de guidage en rotation de disque de frein associé à une roue et les platine 10 selon l'invention constituent des systèmes de support de roue évolutifs dans une gamme de véhicule ayant typiquement une plate forme commune ou pour le moins des trains roulants de même type.

Avantageusement, dans une gamme de véhicules comportant un premier modèle présentant une première voie déterminée à son train roulant avant ou arrière et un deuxième modèle présentant une deuxième voie ce même train roulant avant ou arrière, la deuxième voie étant plus large que la première voie, le premier modèle et le deuxième modèle comportent chacun un système conforme à l'invention. Dans ces systèmes, la platine du premier modèle de véhicule comporte une première épaisseur de partie centrale et la platine du deuxième modèle de véhicule comporte une deuxième épaisseur de partie centrale, la deuxième épaisseur de partie centrale étant plus large que la première épaisseur de partie centrale.

Avantageusement l'invention permet de disposer d'une gamme de dispositifs de fixation d'un étrier de frein à disque pour une gamme de véhicules, caractérisée en ce que les dispositifs de fixation comprennent un premier modèle de platine et un deuxième modèle de platine, chaque platine étant pourvue d'une part d'une partie centrale de support d'un organe de guidage à rotation de disque de frein associé à une roue et d'autre part au moins une partie latérale de support d'étrier de frein et caractérisée en ce que la partie centrale du premier modèle de platine a une première épaisseur prédéterminée dans la direction de l'axe de l'organe de guidage à rotation pour déterminer la première voie du train roulant du premier modèle de véhicule et la partie centrale du deuxième modèle de platine a une deuxième épaisseur prédéterminée pour déterminer la deuxième voie du train roulant du deuxième modèle de véhicule.

Dans cette gamme de dispositifs de fixation, la géométrie des interfaces des composants principaux, à savoir les bras de suspension, les roulements, les étriers et leurs fixations telles que les vis sont réutilisées dans tous les modèles de véhicules, même si leurs voies de train roulant sont différentes. Seule les platines sont différentes, ce qui simplifie la conception, le stockage en bord de chaine de production, la gestion des références des pièces et le stockage des pièces de rechange.

En variante non représentée, la partie centrale est composée d'une pluralité de pièces assemblées. Ces pièces permettent un ajustement de l'épaisseur de la partie centrale.

## Revendications

1. Système de support de roue d'un train roulant de véhicule, comportant un bras de suspension (66), un étrier de frein (12) et un organe (24) de guidage en rotation de disque de frein associé à la roue, **caractérisé en ce qu'**il comporte une platine (10) pourvue d'une part d'une partie centrale (32) de support de l'organe de guidage à rotation (24), qui est interposée entre le bras de suspension (66) et l'organe de guidage en rotation (24), est fixée de manière démontable au bras de suspension et a une épaisseur prédéterminée (E1) dans la direction de l'axe l'organe de guidage à rotation et définissant la voie du train roulant et d'autre part d'au moins une partie latérale (50) de support de l'étrier de frein (12) et tel que la platine (10) peut être remplacée par une autre platine (10) dont la partie centrale (32) a une épaisseur prédéterminée (E2) différente pour définir une voie différente du train roulant.

2. Système selon la revendication précédente, **caractérisé en ce que** la partie centrale (32) comporte une première face plane (62) jointivement en appui sur une face plane (64) du bras de suspension (66), en position de fixation de la platine (10) au bras de suspension (66), et **en ce que** la partie centrale (32) comporte une deuxième face plane (68) à l'opposé de ladite première face plane (62) jointive au bras (66) et à laquelle est fixée l'organe de rotation (24), la distance séparant lesdites première (62) et deuxième (68) faces planes définissant l'épaisseur (E1, E2) de la partie centrale (32).

3. Système selon la revendication précédente, **caractérisé en ce que** la partie latérale (50) de support d'étrier présente une épaisseur fixe (E) à partir de la deuxième face plane (68).

4. Système selon l'une quelconque des revendications précédentes, **caractérisé en ce que** l'organe (24) de guidage en rotation de disque de frein associé à la roue est un roulement pourvu d'un flasque fixe (26) côté bras de suspension (66) et d'un flasque tournant (22) adapté à supporter un disque de frein (12).

5. Système selon la revendication précédente, **caractérisé en ce que** le flasque fixe (26) comporte une bride de fixation à la partie centrale de la platine.

6. Système selon l'une quelconque des revendications précédentes, **caractérisé en ce que** la partie latérale (50) de support d'étrier comporte une oreille périphérique à la partie centrale (32) de la platine (10).

7. Système selon l'une quelconque des revendications précédentes, **caractérisé en ce que** la partie latérale (50) de support d'étrier comporte un perçage (38) de passage de vis de fixation d'étrier de frein.

8. Système selon l'une quelconque des revendications précédentes, **caractérisé en ce que** la partie latérale (50) de support d'étrier a son épaisseur (E) déterminée par la fixation de l'étrier (12) à la platine (10).

9. Système selon l'une quelconque des revendications précédentes, **caractérisé en ce que** la partie centrale (32) de la platine (10) et la partie latérale (50) de support d'étrier ont des épaisseurs différentes.

10. Gamme de dispositifs de fixation d'un étrier de (12) frein à disque pour une gamme de véhicules comportant un premier modèle de véhicule présentant une première voie déterminée à son train roulant avant ou arrière et un deuxième modèle de véhicule présentant une deuxième voie à son même train roulant, la deuxième voie étant plus large que la première voie, **caractérisée en ce que** les dispositifs de fixation comprennent un premier modèle de platine (10) et un deuxième modèle de platine (10), chaque platine (10) étant pourvue d'une part d'une partie centrale de support (32) qui est adaptée à supporter un organe (24) de guidage à rotation de disque de frein (14) associé à une roue du véhicule, est adaptée à être interposée entre un bras de suspension (66) du train roulant du véhicule et l'organe (24) de guidage en rotation, est conformée pour être fixée de manière démontable au bras de suspension et d'autre part d'au moins une partie latérale (50) de support d'étrier de frein et tel que la partie centrale (32) du premier modèle de platine a une première épaisseur (E1) prédéterminée dans la direction de l'axe de l'organe de guidage à rotation pour définir la première voie du train roulant du premier modèle de véhicule et la partie centrale (32) du deuxième modèle de platine a une deuxième épaisseur (E2) prédéterminée dans la direction de l'axe de l'organe de guidage à rotation pour définir la deuxième voie du train roulant du deuxième modèle de véhicule.

## Patentansprüche

1. Radtragsystem eines Fahrzeugfahrwerks, das einen Aufhängungsarm (66), einen Bremssattel (12) und ein Drehführungsorgan (24) der Bremsscheibe, die zu dem Rad gehört, aufweist, **dadurch gekennzeichnet, dass** es eine Platte (10) aufweist, die einerseits mit einem zentralen Tragteil (32) des Bremsscheiben-Drehführungsorgans (24) versehen ist, der zwischen den Aufhängungsarm (66) und das Drehführungsorgan (24) eingefügt ist, demontierbar an dem Aufhängungsarm befestigt ist und eine vorbestimmte Stärke (E1) in die Richtung der Achse des Drehführungsorgans hat und die Spurweite des Fahrwerks definiert, und andererseits mit mindestens einem seitlichen Tragteil (50) des Bremssattels (12) und derart, dass die Platte (10) durch eine andere Platte (10), deren zentraler Teil (32) eine unterschiedliche vorbestimmte Stärke (E2) hat, ersetzt werden kann, um eine andere Spurweite des Fahrwerks zu definieren.

2. System nach dem vorhergehenden Anspruch, **dadurch gekennzeichnet, dass** der zentrale Teil (32) eine erste flache Seite (62) aufweist, die aneinanderliegend auf einer flachen Seite (64) des Aufhängungsarms (66) in Befestigungsposition der Platte (10) an dem Aufhängungsarm (66) aufliegt, und dass der zentrale Teil (32) eine zweite flache Seite (68) gegenüber der ersten flachen Seite (62), die mit dem Arm (66) aneinanderliegt aufweist, und die an dem Drehungsorgan (24) befestigt ist, wobei die Entfernung, die die erste (62) und zweite (68) flache Seite trennt, die Stärke (E1, E2) des zentralen Teils (32) definiert.

3. System nach dem vorhergehenden Anspruch, **dadurch gekennzeichnet, dass** der seitliche Tragteil (50) des Sattels eine fixe Stärke (E) ausgehend von der zweiten flachen Seite (68) aufweist.

4. System nach einem der vorhergehenden Ansprüche, **dadurch gekennzeichnet, dass** das Bremsscheiben-Drehführungsorgan (24), das zu mit dem Rad gehört, ein Lager ist, das mit einem stationären Flansch (26) auf der Seite des Aufhängungsarms (66) und mit einem drehenden Flansch (22), der angepasst ist, um eine Bremsscheibe (12) zu tragen, versehen ist.

5. System nach dem vorhergehenden Anspruch, **dadurch gekennzeichnet, dass** der stationäre Flansch (26) eine Schelle zum Befestigen an dem zentralen Teil der Platte aufweist.

6. System nach einem der vorhergehenden Ansprüche, **dadurch gekennzeichnet, dass** der seitliche Satteltragteil (50) ein umfängliches Ohr an dem zentralen Teil (32) der Platte (10) aufweist.

7. System nach einem der vorhergehenden Ansprüche, **dadurch gekennzeichnet, dass** der seitliche Satteltragteil (50) eine Durchgangsbohrung (38) für Bremssattel-Befestigungsschraube aufweist.

8. System nach einem der vorhergehenden Ansprüche, **dadurch gekennzeichnet, dass** die Stärke (E) des seitlichen Satteltragteils (50) durch die Befestigung des Sattels (12) an der Platte (10) bestimmt ist.

9. System nach einem der vorhergehenden Ansprüche, **dadurch gekennzeichnet, dass** der zentrale Teil (32) der Platte (10) und der seitliche Satteltragteil (50) unterschiedliche Stärken haben.

10. Reihe von Befestigungsvorrichtungen eines Scheibenbremsensattels (12) für eine Reihe von Fahrzeugen, die ein erstes Fahrzeugmodell aufweist, das eine erste festgelegte Spurweite an seinem vorderen oder hinteren Fahrwerk aufweist, und ein zweites Fahrzeugmodell, das an seinem selben Fahrwerk eine zweite Spurweite aufweist, wobei die zweite Spurweite größer ist als die erste Spurweite, **dadurch gekennzeichnet, dass** die Befestigungsvorrichtungen ein erstes Modell einer Platte (10) und ein zweites Modell einer Platte (10) aufweisen, wobei jede Platte (10) einerseits mit einem zentralen Tragteil (32) versehen ist, der angepasst ist, um ein Drehführungsorgan (24) für Bremsscheibe (14), das zu einem Rad des Fahrzeugs gehört, zu tragen, angepasst ist, um zwischen einen Aufhängungsarm (66) des Fahrwerks des Fahrzeugs und das Drehführungsorgan (24) eingefügt zu werden, ausgebildet ist, um demontierbar an dem Aufhängungsarm befestigt zu sein, und andererseits mindestens einen seitlichen Bremssatteltragteil (50) derart, dass der zentrale Teil (32) des ersten Plattenmodells eine erste vorbestimmte Stärke (E1) in die Richtung der Achse des Drehführungsorgans hat, um die erste Spurweite des Fahrwerks des ersten Fahrzeugmodells zu definieren, und der zentrale Teil (32) des zweiten Plattenmodells eine zweite vorbestimmte Stärke (E2) in die Richtung der Achse des Drehführungsorgans hat, um die zweite Spurweite des Fahrwerks des zweiten Fahrzeugmodells zu definieren.

## Claims

1. A wheel carrier system for a vehicle axial assembly comprising a suspension arm (66), a brake calliper (12) and a member (24) for guiding the rotation of a brake disc associated with the wheel, **characterized in that** it comprises a mounting plate (10) provided on the one hand with a central part (32) that supports the rotational guidance member (24), which part is interposed between the suspension arm (66) and the rotational guidance member (24), is fixed removably to the suspension arm and has a predetermined thickness (E1) in the direction of the axis of the rotational guidance member and defines the gauge width of the axial assembly and, on the other hand, with at least one lateral part (50) that supports the brake calliper (12), and such that the mounting plate (10) can be replaced with another mounting plate (10), the central part (32) of which has a different predetermined thickness (E2) in order to define an axial assembly with a different gauge width.

2. The system according to the preceding claim, **characterized in that** the central part (32) comprises a first flat face (62) jointly resting on a flat face (64) of the suspension arm (66), in fixing position of the mounting plate (10) to the suspension arm (66), and **in that** the central part (32) comprises a second flat face (68) opposite the said first flat face (62) contiguous to the arm (66) and to which the rotational member (24) is fixed, the distance separating the said first (62) and second (68) flat faces defining the thickness (E1, E2) of the central part (32).

3. The system according to the preceding claim, **characterized in that** the lateral part (50) that supports the calliper has a fixed thickness (E) from the second flat face (68).

4. The system according to any one of the preceding claims, **characterized in that** the member (24) for guiding the rotation of the brake disc associated with the wheel is a bearing provided with a fixed flange (26) on the suspension arm (66) side and with a rotating flange (22) suitable for bearing a brake disc (12).

5. The system according to the preceding claim, **characterized in that** the fixed flange (26) comprises a fixing brace to the central part of the mounting plate.

6. The system according to any one of the preceding claims, **characterized in that** the lateral part (50) that supports the calliper comprises a peripheral lug to the central part (32) of the mounting plate (10).

7. The system according to any one of the preceding claims, **characterized in that** the lateral part (50) that supports the calliper comprises a drilled hole (38) for the passage of a fixing screw of the brake calliper.

8. The system according to any one of the preceding claims, **characterized in that** the lateral part (50) that supports the calliper has its thickness (E) determined by the fixing of the calliper (12) to the mounting plate (10).

9. The system according to any one of the preceding claims, **characterized in that** the central part (32) of the mounting plate (10) and the lateral part (50) that supports the calliper have different thicknesses.

10. A range of fixing devices of a disc brake calliper (12) for a range of vehicles comprising a first vehicle model having a first determined gauge width to its front or rear axial assembly, and a second vehicle model having a second gauge width to its selfsame axial assembly, the second gauge being wider than the first gauge, **characterized in that** the fixing devices include a first mounting plate model (10) and a second mounting plate model (10), each mounting plate (10) being provided on the one hand with a central support part (32) which is suited to support a member (24) for guiding the rotation of a brake disc (14) associated with a wheel of the vehicle, is suited to be interposed between a suspension arm (66) of the axial assembly of the vehicle and the rotational guidance member (24), is shaped to be fixed removably to the suspension arm and on the other hand with at least one lateral part (50) that supports the brake calliper and such that the central part (32) of the first mounting plate model has a first predetermined thickness (E1) in the direction of the axis of the rotational guidance member to define the first gauge width of the axial assembly of the first vehicle model and the central part (32) of the second mounting plate model has a second predetermined thickness (E2) in the direction of the axis of the rotational guidance member to define the second gauge width of the axial assembly of the second vehicle model.
